# EUROPEAN PATENT APPLICATION

(11) **EP 0 980 148 A2**
(43) Date of publication of application: **16.02.2000**
(21) Application number: 99306051.6
(22) Date of filing: 29.07.1999
(51) Int. Cl.: H03M 13/29, H03M 13/27, H04L 1/00, H04Q 7/00

(54) **Method and apparatus for channel coding and decoding for modulation schemes and memory**

(30) Priority: 12.08.1998 FI 981745
(71) Applicant: NOKIA MOBILE PHONES LTD., 02150 Espoo (FI)
(72) Inventor: Nefedov, Nikolai, 02760 Espoo (FI)
(74) Representative: Higgin, Paul

(57) **Abstract**

For transferring digital information in the form of consecutive symbols from a transmitter over a transmission channel susceptible for intersymbol interference to a receiver, the following steps are taken in succession:
a) encoding the digital information to be transmitted with an outer code (202),
b) interleaving the encoded digital information to be transmitted (203),
c) encoding the interleaved encoded digital information with a recursive inner code (204) and in conjunction therewith modulating the encoded interleaved encoded digital information onto a carrier (205),
d) transmitting the carrier containing the modulated encoded interleaved encoded digital information,
e) receiving the transmitted carrier containing the modulated encoded interleaved encoded digital information,
f) producing an estimate of the characteristics of the transmission channel (208),
g) converting the received carrier into consecutive symbols in a SISO equalisation process using the produced estimate of the characteristics of the transmission channel (209),
h) deinterleaving the consecutive symbols (210), and
i) decoding the deinterleaved consecutive symbols in a SISO decoding process (211).

## Description

The invention concerns a method for channel coding and decoding that will provide good performance under a wide variety of radio channel conditions. The invention concerns also a transmitter device and a receiver device that will realise the method of the invention in practice.

Channel coding in general introduces redundancy into a flow of data to be transmitted. It increases the data rate in the transmitting device by adding into it information calculated from the contents of some consecutive blocks of data. After channel coding the data to be transmitted is in the form of consecutive code words. The reason for channel coding is to allow the detection or even the correction of signal errors introduced later during transmission. The inverse operation of channel coding is channel decoding, which takes place in the receiving device. Channel coding is often accompanied by interleaving, in which bits of several code words are mixed together in a predetermined fashion. The aim of interleaving is to decorrelate errors that will potentially occur in the transmission so that the resulting erraneous bits will be distributed into essentially randomised positions in several code words instead of corrupting a sequence of successive bits in a single code word. The inverse operation of interleaving is deinterleaving. Interleaving is sometimes assumed to form a single integrated functional entity together with pure channel coding.

As a background for the invention, the known full-rate speech channel coding and interleaving scheme of the GSM (Global System for Mobile telecommunications) digital cellular system is briefly described. The GSM channel encoder receives consecutive blocks of 260 bits from a speech encoder at a rate of 13 kbit/s, i.e. one block at each 20 ms. Of the 260 bits of a block, the channel encoder protects 182 bits by a convolutional block code with a convolutional efficiency equal to ½ and no puncturing. Among these 182 bits, 50 bits are additionally protected by a detection code that adds 3 redundancy bits. The other 78 bits go unprotected. The resulting code word is 456 bits long. In the interleaver it is split into eight groups of 57 bits. Each group will end up in a different transmission burst according to a specific diagonal interleaving scheme: the bits from positions i, i+8, i+16,..., i+448 go to the evenly numbered bit positions of a burst N+i, where N is the burst number referring to some burst numbering scheme and the index i determines the bit group and takes the integral values from 0 to 3. Similarly the bits from positions j, j+8, j+16,..., j+448 go to the oddly numbered bit positions of a burst N+j, where the index j takes the integral values from 4 to 7.

The performance of a channel coding and decoding scheme is measured as the simulated probability of undetected and/or uncorrected errors under different radio channel conditions. The conventional expression for the latter is E_{b}/N₀ or the amount of received bit energy over the combined noise and interference density. In a typical performance diagram a curve connects the points obtained as a result from simulation in a semi-logarithmic scale where the horizontal axis is E_{b}/N₀ in decibels and the logarithmic vertical axis is BER (Bit Error Ratio) or other error ratio in negative powers of ten. The closer the curve is to the lower left point in the diagram, the better the performance. A coding-decoding scheme with good performance results is said to employ a powerful code.

Recently a class of very powerful binary "turbo" codes with efficient iterative decoding methods has been proposed in C. Berrou *et al*: 'Near Shannon Limit Error-Correcting Coding and Decoding: Turbo Codes (1)', *Proc. ICC'93*, Geneva, pp.1064-1070, June 1993. A formal definition for the "turbo" codes is the Parallel Concatenation of interleaved Convolutional Codes (PCCC). Despite of their good performance, the publications S.Benedetto, G.Montorsi, D.Divsalar, F.Pollara, 'Serial Concatenation of Interleaved Codes: Performance Analysis, Design, and Iterative Decoding', *TDA Progress Report 42-126*, August 15, 1996, JPL/NASA and D.Divsalar, F.Pollara, 'Serial and Hybrid Concatenated Codes with Applications', *Proc. Inter Symposium on Turbo Codes*, Breast, Sept.1997, pp.80-87 show that in some cases the known serially concatenated convolutional codes (SCCC) with interleavers yield superior performance to PCCC.

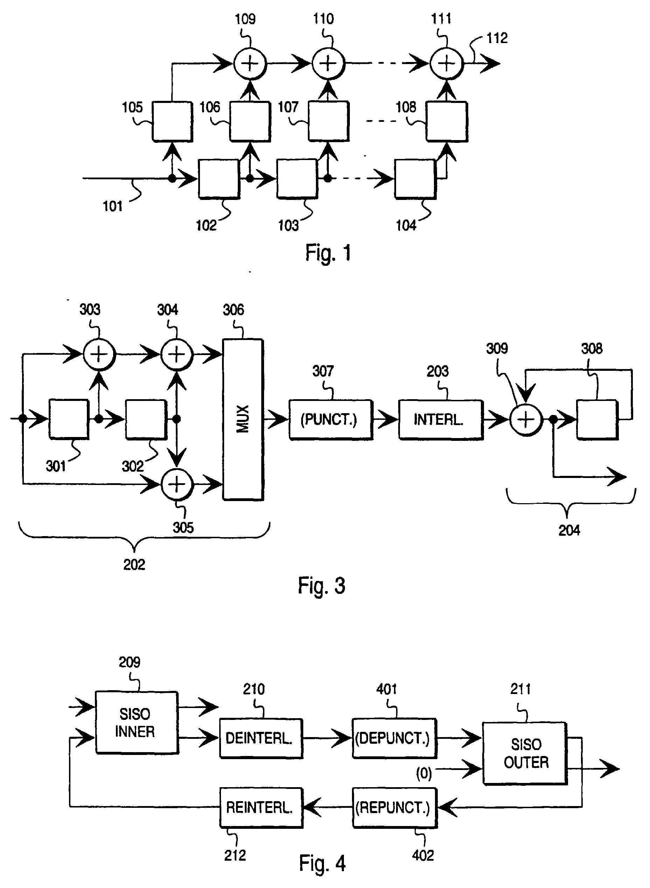

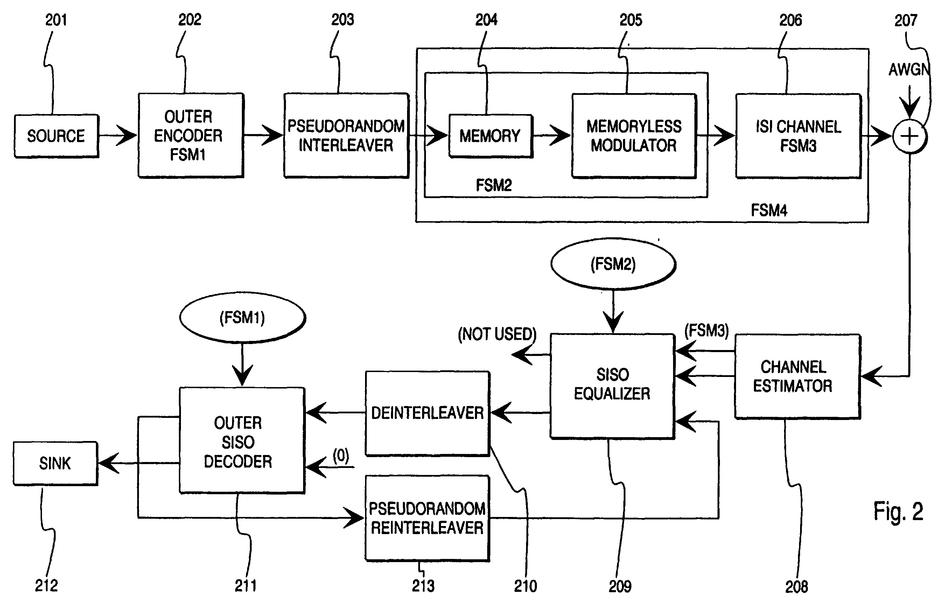

The problem of choosing an optimal channel coding method arises from the fact that the nature of the radio channel varies as a function of time. One decisive factor is the amount of ISI (InterSymbol Interference) in the radio channel. In the applications considered here, the transmitted radio signal consists of symbols where each symbol is a period of sinusoidal oscillation having a certain phase and amplitude and a duration in the order of microseconds. The phase and/or amplitude of the symbol in relation to a certain reference phase and/or amplitude determines, which bit value or bit value combination the symbol refers to. An ISI channel may be modelled as a FIR (Finite Impulse Response) filter as the one in Fig. 1. The incoming (transmitted) signal on line 101 will experience an arbitrary number of delays 102, 103 and 104, where the length of each delay depends on the momentary propagation conditions of the radio wave. The weighting coefficients 105, 106, 107 and 108 are called the taps of the filter and they determine the relative importance of each delayed signal component. The summing means 109, 110 and 111 produce an outgoing (received) signal on line 112 which is the sum of the differently delayed and weighted signal components. As a result, any sequence of the received signal comprises a contribution from a number of consecutive symbols.

From the publications C. Douillard *et al*, 'Iterative Correction of Intersymbol Interference: Turbo- Equalization', *European Trans.Telecom ETT*, vol.6, No.5, pp.507-511, 1995 and A. Picart *et al*, 'Turbo-detection: A New Approach to Combat Channel Frequency Selectivity', *Proc. ICC'97*, Montreal, pp.1498-1502, 1997 it is known that the filter or other signal processing element that simulates the ISI may conceptually be regarded as a part of an inner encoder in an SCCC channel coding scheme. The corresponding channel decoding process is known as turbo-equalization. However, a FIR is a non-recursive filter and it is known that to get maximal performance the inner encoder of SCCC should be recursive. On the other hand the performance improvement provided by turbo-equalization is mainly noticeable for channels with severe ISI and much less apparent for channels with moderate or low ISI. This is in perfect agreement with the known fact that the weaker the inner code in an SCCC scheme, the less improvement is to be obtained by turbo-equalization. Even if the ISI is severe and correspondingly turbo-equalization should provide maximal gain, the non-recursivity of the ISI implies that a channel estimator in the receiver should accurately estimate the time-varying inner structure of the ISI (the time-varying taps of the filter that represents the ISI), which is not always feasible.

It is therefore an object of the present invention to provide a channel coding and decoding scheme that would provide good performance regardless of the strength of the ISI. It is also an object of the invention to provide a transmitter and a receiver that realise the method of the invention in practice.

The invention achieves the above-mentioned objects by introducing the ISI component of the radio channel with a recursive property as a part of the modulator with memory.

The method according to the invention is characterised in that it contains the successive steps of
a) encoding the digital information to be transmitted with an outer code,
b) interleaving the encoded digital information to be transmitted,
c) encoding the interleaved encoded digital information with a recursive inner code and in conjunction therewith modulating the encoded interleaved encoded digital information onto a carrier, and
d) transmitting the carrier containing the modulated encoded interleaved encoded digital information.

The invention applies also to a method for transferring digital information in the form of consecutive symbols from a transmitter over a transmission channel susceptible for intersymbol interference to a receiver. It is characterised in that it contains the successive steps of
a) encoding the digital information to be transmitted with an outer code,
b) interleaving the encoded digital information to be transmitted,
c) encoding the interleaved encoded digital information with a recursive inner code and in conjunction therewith modulating the encoded interleaved encoded digital information onto a carrier,
d) transmitting the carrier containing the modulated encoded interleaved encoded digital information,
e) receiving the transmitted carrier containing the modulated encoded interleaved encoded digital information,
f) producing an estimate of the characteristics of the transmission channel,
g) converting the received carrier into consecutive symbols in a SISO equalisation process using the produced estimate of the characteristics of the transmission channel,
h) deinterleaving the consecutive symbols, and
i) decoding the deinterleaved consecutive symbols in a SISO decoding process.

The invention applies further to a transmitter, characterised in that comprises in succession
a) an outer encoder for encoding the digital information to be transmitted with an outer code,
b) an interleaver for interleaving the encoded digital information to be transmitted, and
c) a recursive inner encoder and a modulator for encoding the interleaved encoded digital information with a recursive inner code and in conjunction therewith modulating the encoded interleaved encoded digital information onto a carrier.

It is possible to present an SCCC coding scheme in such a way that the inner encoder is at least partly integrated into the modulator, where it is considered as a part of a modulator with memory. According to the invention a recursive inner encoder, a memoryless modulator and an ISI channel form a combined structure that the receiver may treat as a finite state machine in the transmitting end, the Trellis path of which is possible to reconstruct by means of turbo-equalisation. An outer encoder and a pseudorandom interleaver precede the mentioned combination in the transmitter to make it an SCCC encoder. In the receiver a first decoder comprises a channel estimator to estimate the parameters of the radio channel and a Soft In - Soft Out (SISO) equalizer to remove the coding introduced by said inner encoder of the transmitting end. A deinterleaver removes the interleaving from the output of the first decoder, and a second SISO decoder removes the coding made in the outer encoder of the transmitter. A number of iterative decoding rounds in the receiver may be provided by re-interleaving the output of the second SISO decoder and feeding the result back into the SISO equalizer in the first decoder.

The invention does not place limitations to the outer encoder, so it may be for example another SCCC encoder or the known convolutional channel encoder of the GSM system. The invention is readily applicable to optimise the channel coding performance for example within the EDGE framework known to the person skilled in the art from the publication ETSI: STC SMG2,'Enhanced Data rates for GSM Evolution (EDGE)', *Tdoc 60/98*, Geneva, Switzerland, 23-27 February, 1998.

The novel features which are considered as characteristic of the invention are set forth in particular in the appended Claims. The invention itself, however, both as to its construction and its method of operation, together with additional objects and advantages thereof, will be best understood from the following description of specific embodiments when read in connection with the accompanying drawings.
Fig. 1 illustrates the presentation of an ISI channel as a FIR filter,
Fig. 2 illustrates a system according to the invention,
Fig. 3 presents a possible detailed structure for the encoders of Fig. 2 and
Fig. 4 present a variation of the receiving side of Fig. 2.

Fig. 1 was referred to in the description of prior art, so the following discussion of the preferred embodiments of the invention will focus primarily on Figs. 2 - 4.

Fig. 2 illustrates a data transmission system consisting of a transmitter, a receiver and a radio channel between them. The transmitter comprises an arbitrary data source 201 which may be for example a speech codec or a video codec for converting an analogue audio and/or video signal into a stream of digital data. It is followed by the outer encoder 202 of the channel encoding scheme. The output of the outer encoder is coupled to the input of an interleaver 203 which, for the system according to the invention to provide maximal performance, must be a pseudorandom interleaver (using for example the GSM systematic diagonal interleaver mentioned in the description of prior art would not yield satisfactory performance). Pseudorandom interleavers are known as such from prior art. Their operation is based on interleaving the bits from a number of consecutive code words in a way that appears to be random but actually follows with unambiguous causality from a predetermined seed number.

The interleaved code words are fed into a block 204 labeled as "memory". Its function in the system of Fig. 2 is to realise, together with the following memoryless modulator 205, a recursive inner code. The invention does not place specific limitations to which kind of recursive inner coding is used. Block 204 is, as mentioned, followed by a memoryless modulator 205 which maps the digital data to be transmitted into transmission symbols. With "memoryless" it is meant that on the contrary to the operation of block 204, block 205 does not introduce into the transmission symbols any dependency on previous transmission symbols. This is not a strict requirement in the system according to the invention, but conceptually it is easier to handle the recursivity block and the modulator block as separate units. An example of a memoryless modulator is the 8PSK (8-level Phase Shift Keying) modulator used in the EDGE (Enhanced Datarates for GSM Evolution).

The output of the memoryless modulator block 205 is the output of the transmitter device. It goes next to the intersymbol interference or ISI block 206, which is not part of a real-life transmitter but represents the processes causing intersymbol interference that take place on the radio path between the transmitter and the receiver. However, conceptually the ISI block 206 will here be regarded as operating in conjunction with blocks 204 and 205. Additive White Gaussian Noise (AWGN) is summed to the output of block 206 in the summing element 207; this is again a process that actually takes place on the radio path in a distributed fashion. The receiver comprises a channel estimator 208, the function of which is to monitor certain parts of the received signal and to estimate on the basis of observations such characteristics of the radio channel that can be accounted for in the decoding process. If the ISI block 206 is thought to be a FIR filter like that in Fig. 1, the task of the channel estimator block 208 is to estimate the taps of the filter. The information generated in the course of channel estimation is provided to the SISO equalizer block 209 along with the received data to be decoded. Conventional SISO equalizers usually have two outputs, of which only one is used here. It is coupled to the input of a deinterleaver 210 for removing the interleaving made in block 203. The deinterleaved data is directed to a SISO decoder 211 which has also two outputs. The first output is coupled to a data sink 212 and the second output is coupled, through a reinterleaver block 213, to one of the inputs of the SISO equalizer block 209.

The operation of a coding entity in a transmitting device may be viewed as a series of state transitions in a Finite State Machine (FSM). At any given moment the coding entity must be in one of its allowed states. From each state there is a predetermined number of allowed transitions to other states.

The transitions that take place are results of reading as an input the stream of data to be transmitted. It is the task of a corresponding entity in the receiving device to track down the transitions that have taken place in the transmitting device and to reconstruct the stream of data that must have caused the observed sequence of state transitions. To accomplish this task the entity in the receiving device uses the received stream of data as an input and applies its knowledge about which transitions are allowed and what seems to be the probability that certain sequence of transitions have occurred. This process is known as finding the correct Trellis path through the sets of allowed states. In iterative decoding the receiver runs a decoding algorithm several times on same data and uses the result(s) from the previous round(s) to refine its judgement on those transitions that are not completely clear.

In the system of Fig. 1, the first FSM in the transmitter is the outer encoder 202, designated also as FSM1. The second FSM or FSM2 consists of the recursive inner encoder block 204 and the memoryless modulator block 205. The third FSM or FSM3 is the ISI channel representation 206 and the fourth FSM or FSM4 is a combination of the second FSM and the third FSM. In the receiver the SISO decoder 211 tries to track down the state transitions that have taken place in the outer encoder 202. For doing this it uses its pre-programmed knowledge about the allowed transitions; the pre-programmed knowledge appears in Fig. 2 as the oval block labeled (FSM1). Similarly the SISO equalizer 209 retrieves the operation of the entity formed by the memory block 204 and the memoryless modulator 205, by using the pre-programmed knowledge represented by (FSM2).

The channel estimator 208 is the receivers counterpart for the ISI block 206, but it can not have any pre-programmed knowledge about the operation of block 206 because the ISI block is not a causally operating part of any real-life device but only a conceptual representation of the phenomena that take place on the radio path between the transmitter and the receiver. To accomplish its task the channel estimator monitors a certain part of the received signal. Said certain part is typically a "training sequence" or other interval in each transmission burst that repeats itself in a known form. The channel estimator monitors the received signal during the training sequence and generates an estimate about what kind of channel conditions could have caused the observed deviations from the predetermined form of the signal. Channel estimation of this kind is known as such to the person skilled in the art. The SISO equalizer 209 receives the generated estimate, designated as (FSM3), as input information from the channel estimator 208 parallelly with the actual received signal.

Let us assume that the system of Fig. 2 operates under conditions where ISI is severe. As stated above in the description of prior art, the iterative turbo-equalisation performed by the receiver structure of Fig. 2 is correspondingly at its best in providing gain in comparison with other decoding schemes. Further, the recursivity added in block 204 aids in effectively performing the decoding. The channel estimator 208 delivers the estimated channel parameters to the SISO equalizer 209, which in this case works over the combined Trellis of the combined entity FSM4 on the conceptually viewed transmitting side.

Next we may assume that ISI is moderate or weak. On the conceptually viewed transmitting side, this corresponds to block 206 being nonexistent or at least not very significant in terms of introduced channel coding in relation to the other blocks. In the receiver, channel estimation is rather straightforward, so also the functional significance of block 208 is rather limited. In that case the channel coding scheme resembles an SCCC channel coding solution, which is known to outperform PCCC or turbo codes under weak ISI conditions.

In order to keep the complexity low both in the transmitter and in the receiver, the inner code used in block 204 may be a very simple recursive code. For example, a differential encoder may be used as an inner encoder. Fig. 3 illustrates an exemplary construction for blocks 202 and 204. The outer encoder consists of two delay elements 301 and 302 together with three summing elements 303, 304 and 305 and a multiplexer 306. Puncturing 307 may be performed between the outer encoder 202 and the interleaver 203, but this is not necessary if the available data rates otherwise meet the output rate of the encoding scheme. The simple inner encoder 204 of Fig. 3 consists of only one delay element 308 and a summing element 309. A simple way to implement a more complex inner code is to add delay elements one after each other in block 204 and to combine the outputs of the delay elements in some preferred way. A more elaborate way of integrating a recursive inner encoder and a modulator would be to use some Trellis Coded Modulator (TCM) like a Parallel Concatenated Trellis Coded Modulator or a Serial Concatenated Trellis Coded Modulator known as such from for example the publication D.Divsalar, F.Pollara, 'Serial and Hybrid Concatenated Codes with Applications', *Proc. Inter Symposium on Turbo Codes*, Breast, Sept.1997, pp.80-87.

Fig. 4 illustrates an iterative decoder that can be used if the encoder is the one in Fig. 3. The only difference to the structure of Fig. 2 is the use of a depuncturing block 401 and a repuncturing block 402 which are needed if block 307 is present in the transmitting end. Naturally block 209 must be constructed so that the decoding operation it performs conforms to the code used in block 204, and equally the decoding function of block 211 must correspond to the code introduced by block 202. Presenting a corresponding decoding structure for a known encoder is as such known to the person skilled in the art.

Simulation results for the rather simple structures of Figs. 3 and 4 show that if the size of a data sequence to be interleaved is the same as a GSM data frame and the channel has AWGN properties, after 4 iterations the SCCC scheme outperforms the 1/2-rate convolutional code (CC) used in GSM at BER (Bit Error Ratio) <10⁻³ and provides a gain of 1.5 dB at BER = 10⁻⁶. An additional gain of 1 dB may be obtained by using a MAP (Maximum Aposteriori Probability) algorithm in the SISO blocks instead of the more common max-log-MAP algorithm and increasing the number of iterations. Even more gain may be obtained if the GSM convolutional code is used as the outer code.

A significant advantage of the system according to the invention is that it allows for building different kinds of receivers in terms of complexity and performance. A simple receiver might have the capacity to perform only a limited number of iterations during each decoding cycle. A more expensive "high-end" receiver might have a faster processor and faster other signal processing circuits and correspondingly the capacity of performing more iterations during each decoding cycle. By increasing the number of iterations the number of decoding errors can be reduced, although at some stage (usually around some tens of iterations) the receiver performance will start approaching a theoretical limit.

## Claims

1. A method for transmitting digital information in the form of consecutive symbols over a transmission channel susceptible for intersymbol interference, **characterised in that** it contains the successive steps of
a) encoding the digital information to be transmitted with an outer code (202),
b) interleaving the encoded digital information to be transmitted (203),
c) encoding the interleaved encoded digital information with a recursive inner code (204) and in conjunction therewith modulating the encoded interleaved encoded digital information onto a carrier (205), and
d) transmitting the carrier containing the modulated encoded interleaved encoded digital information.

2. A method according to claim 1, **characterised in that** step b) consists of pseudorandom interleaving (203).

3. A method according to claim 1, **characterised in that** the recursive inner code in step c) is a differential code (204).

4. A method according to claim 3, **characterised in that** step c) consists of modulating the interleaved encoded digital information onto a carrier using a differential modulation method (204, 205).

5. A method according to claim 1, **characterised in that** the outer code in step a) is a convolutional code (202).

6. A method according to claim 5, **characterised in that** the outer code in step a) is a serial concatenated convolutional code (202).

7. A method for transferring digital information in the form of consecutive symbols from a transmitter over a transmission channel susceptible for intersymbol interference to a receiver, **characterised in tha**t it contains the successive steps of
a) encoding the digital information to be transmitted with an outer code (202),
b) interleaving the encoded digital information to be transmitted (203),
c) encoding the interleaved encoded digital information with a recursive inner code (204) and in conjunction therewith modulating the encoded interleaved encoded digital information onto a carrier (205),
d) transmitting the carrier containing the modulated encoded interleaved encoded digital information,
e) receiving the transmitted carrier containing the modulated encoded interleaved encoded digital information,
f) producing an estimate of the characteristics of the transmission channel (208),
g) converting the received carrier into consecutive symbols in a SISO equalisation process using the produced estimate of the characteristics of the transmission channel (209),
h) deinterleaving the consecutive symbols (210), and
i) decoding the deinterleaved consecutive symbols in a SISO decoding process (211).

8. A method according to claim 7, **characterised in tha**t it comprises a number of iterations through steps g), h) and i) as well as a step of reinterleaving (213) between steps i) and g), said number being at least 2.

9. A method according to claim 7, **characterised in that** the SISO equalisation process of step g) (209) works over the combined Trellis of the recursive inner code and modulation of step c) and the nonrecursive intersymbol interference characteristics of the transmission channel.

10. A transmitter for transmitting digital information in the form of consecutive symbols over a transmission channel, **characterised in that** it comprises in succession
a) an outer encoder (202) for encoding the digital information to be transmitted with an outer code,
b) an interleaver (203) for interleaving the encoded digital information to be transmitted, and
c) a recursive inner encoder (204) and a modulator (205) for encoding the interleaved encoded digital information with a recursive inner code and in conjunction therewith modulating the encoded interleaved encoded digital information onto a carrier.

11. A transmitter according to claim 10, **characterised in that** said interleaver (203) is a pseudorandom interleaver.

12. A transmitter according to claim 10, **characterised in that** said recursive inner encoder and modulator form an integrated structure (FSM2).

13. A transmitter according to claim 12, **characterised in that** said integrated structure is a differential modulator.

14. A transmitter according to claim 12, **characterised in that** said integrated structure is a Trellis Coded Modulator.
